**Europäisches Patentamt**

**European Patent Office**

**Office européen des brevets**

(19)

(11) Veröffentlichungsnummer : **0 219 613 B2**

(12) **NEUE EUROPÄISCHE PATENTSCHRIFT**

(45) Veröffentlichungstag der neuen Patentschrift :
03.06.92 Patentblatt 92/23

(51) Int. Cl.⁵ : **B60T 17/08**

(21) Anmeldenummer : **86109559.4**

(22) Anmeldetag : **12.07.86**

(54) **Federspeicherzylinder, insbesondere druckmittelbetätigter Federspeicherbremszylinder für Strassenfahrzeuge.**

(30) Priorität : **16.10.85 DE 3536766**

(43) Veröffentlichungstag der Anmeldung :
**29.04.87 Patentblatt 87/18**

(45) Bekanntmachung des Hinweises auf die
Patenterteilung :
**14.06.89 Patentblatt 89/24**

(45) Bekanntmachung des Hinweises auf die
Entscheidung über den Einspruch :
**03.06.92 Patentblatt 92/23**

(84) Benannte Vertragsstaaten :
**AT CH DE FR GB IT LI NL SE**

(56) Entgegenhaltungen :
**EP-A- 0 025 559**
**DE-B- 1 805 167**
**FR-A- 1 529 468**
**FR-A- 2 234 487**
**GB-A- 1 186 788**
**GB-A- 1 192 338**
**US-A- 2 992 630**

(73) Patentinhaber : **WABCO Westinghouse**
**Fahrzeugbremsen GmbH**
**Am Lindener Hafen 21 Postfach 91 12 80**
**W-3000 Hannover 91 (DE)**

(72) Erfinder : **Ewald, Jürgen**
**Würzburger Strasse 14**
**W-3014 Laatzen 1 (DE)**
Erfinder : **Frania, Josef**
**An der Bauerwiese 10 d**
**W-3000 Hannover 91 (DE)**
Erfinder : **Glogowschek, Roland**
**Skagenhof 7**
**W-3000 Hannover 91 (DE)**

(74) Vertreter : **Schrödter, Manfred**
**WABCO Westinghouse Fahrzeugbremsen**
**GmbH Am Lindener Hafen 21 Postfach 91 12**
**80**
**W-3000 Hannover 91 (DE)**

## Beschreibung

Die erfindung betrifft einen Federspeicherbremszylinder gemäß dem Oberbegriff des Patentanspruchs 1.

Ein solcher Federspeicherzylinder ist durch die DE-PS 29 43 763 vorbekannt. Hierbei ist der topfförmige Zylinder des Federspeicherteils mit dem Boden des Zylinders einstückig ausgeführt. Ein dem Boden gegenüberliegend angeordneter Flansch ist mit dem Zylinder lösbar verbunden. Er dichtet die Druckkammer des Federspeicherzylinders gegen die Atmosphäre ab und dient zur axialen Führung des Federspeicherkolbens. Die dem Federspeicher zylinder abgewandte Seite des Flansches dient zur Aufnahme eines Betriebremszylinders.

Der Zusammenbau des Federspeicherzylinders erfolgt in der Weise, daß zunächst die als Federspeicher dienende Schraubendruckfeder auf den Boden des Zylinders gesetzt wird. Danach wird der Federspeicherkolben mittels einer Montagevorrichtung in den Zylinder eingeführt und soweit gegen den Federspeicher bewegt, daß eine mechanische Bremslöseeinrichtung, die einen Schraubenbolzen und eine außerhalb des Zylinderbodens angeordnete Gewindescheibe umfaßt, montiert werden kann. Mit Hilfe der Bremslöseeinrichtung wird der Federspeicherkolben soweit gegen den Federspeicher vorgespannt, daß die Montagevorrichtung entfernt und der Zylinder mit dem Flansch verbunden werden kann. Durch Lockern der Bremslöseeinrichtung bewegt sich der Federspeicherkolben durch die Kraft des sich entspannenden Federspeichers in eine Betriebsstellung in der er durch Druckluft beaufschlagt, einen Arbeitshub ausführen kann.

Die Demontage erfolgt in der Weise, daß zunächst der Zylinder vom Flansch getrennt wird. Danach wird der Federspeicherkolbn mittels einer Montatagevorrichtung soweit gegen den Federspeicher bewegt, daßie Bremslösseeinrichtung demontierbar ist. Die Montagevorrichtung wid dann langsam entspannt, so daß der Federspeicherkolben unter der Kraft des sich entspannenden Federspeichers aus dem Zylinder herausgeschoben wird.

Die Montage sowie die Demontage erfordert nacheinander erfolgende Montageschritte und ist daher relativ aufwendig und in bezug auf die Montagezeit nichtoptimal. Das Hantieren am Federspeicherzylinder in der oben beschriebenen Weise kann nur mit Hilfe einer Spezialvor richtung erfolgen, die den Federspeicher vorspannen und in der vorgespannten Stellung sicher halten kann.

Der durch die DE-PS 16 80 232 bekannte Federspeicherzylinder hat einen Boden, der durch einen Axialsicherungsring mit dem Federspeicherzylinder lösbar verbunden ist. Hierdurch lassen sich der Boden, der Federspeicher und der durch die Bremslöseeinrichtung gegen den Federspeicher vorspannbare Federspeicherkolben in einer Vormontage zu einer Einheit zusammenfügen. Diese in den Federspeicherzylinder eingeschobene Einheit ist dann über den Boden und den Axialscherungsring mit dem Federspeicherzylinder verbindbar. Durch anschließendes Lockern der Bremslösseeinrichtung wird der Federspeicherzylinder in der oben beschriebenen Weise betriebsbereit.

Eine solche Einrichtung mit vom Zylinder trennbaren Boden erfordert zumindest im Bereich der Halterung des Axialsicherungsringes eine verstärkt ausgebildete Zylinderwandung so daß ein als Blechziehteil ausgeführter Zylinder in vorteilhafter Leichtbauweise hierfür nicht verwendbar ist.

Diese Ausführung hat außerdem den Nachteil, daß bei unbeabsichtigtem oder unsachgemäßem Lösen des Axialsicherungsringes, bei betriebsbereitem Federspeicherzylinder, durch plötzliches, unkontrolliertes Entspannen des Federspeichers, die Einheit Boden, Federspeicher, Federspeicherkolben und Bremslöseeinrichtung den Federspeicherzylinder geschoßartig verläßt. Die Montage und die Demontage dieses Federspeicherzylinders erfordert daher die Beachtung werkstattgebundener Sicherheitsmaßnahmen. Mit der FR-PS 1 529 468 ist ein Federspeicherzylinder bekannt, dessen Federspeicher zwischen dem Federspeicherkolben und einem Federteller angeordnet ist. Der Federteller ist an der Wand eines Federspeicherdeckels abgestützt. Ein Schraubenbolzen durchdringt den Federspeicherkolben, den Federspeicher, den Federteller und den Deckel des Federspeichers. Durch Entfernen des zylindrischen Teils des Federspeichergehäuses und des Deckels ist die Montageeinheit bestehend aus dem Federspeicherkolben, dem Federspeicher, dem Federteller sowie dem diese Teile zusammenhaltenden Schraubenbolzen leicht zugänglich. Dies ist deshalb möglich, weil mit diesem Typ des Federspeicherzylinders das Festsetzen der Bremse durch ziehen des Bremsgestänges erfolgt. Ein für eine solche Betriebsweise bestimmter Federspeicherzylinder erlaubt jedoch nicht die Koppelung mit einem Betriebsbremsteil in der Weise, wie es bei dem Federspeicherzylinder gemäß DE-PS 29 43 763 möglich ist.

Der Erfindung liegt daher die Aufgabe zugrunde, eine der FR-PS 1 529 468 eigene vorteilhafte Montage- und Demontagemöglichkeit auch bei dem Federspeicherzylinder gemäß DE-PS 29 43 763 zu ermöglichen.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß der Zusammenbau und das Zerlegen des Federspeicherzylinders ohne Montagevorrichtung erfolgen kann, so daß einfache Reparaturen, wie z.B. das Auswechseln von Dichtungen

2

nicht an eine Spezialwerkstatt gebunden sind.

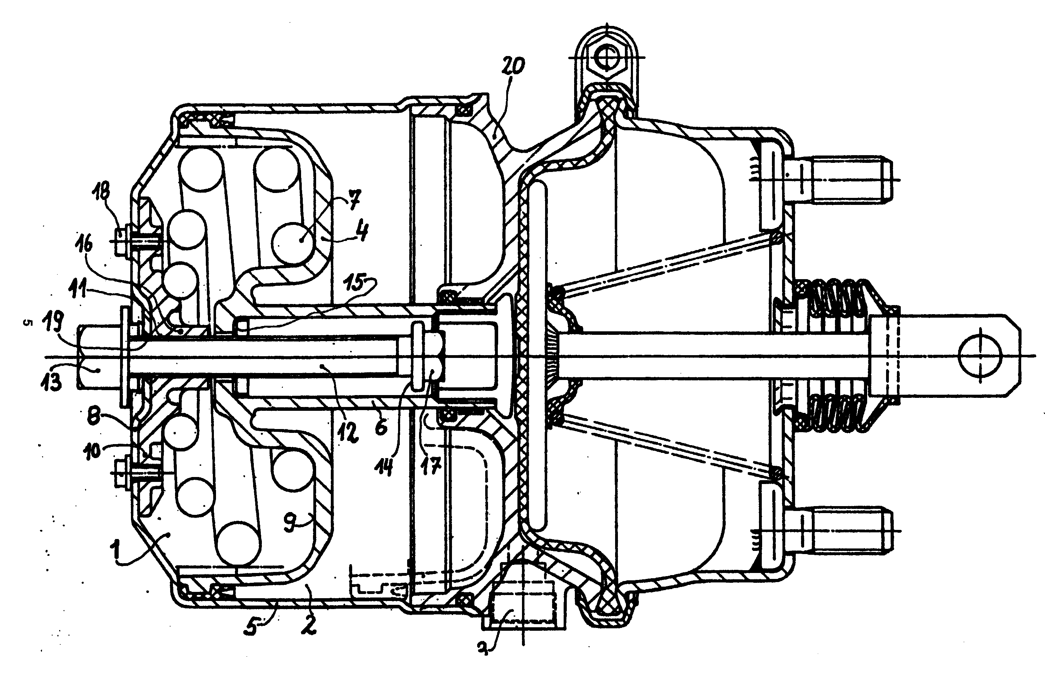

Die Erfindung wird anhand eines Ausführungsbeispiels, das in der Zeichnung dargestellt ist, näher erläutert. Die Zeichnung zeigt einen Federspeicherzylinder mit einer mechanischen Spanneinrichtung, die einen vom Boden des Federspeicherzylinders lösbaren Federteiler aufweist.

In der Zeichnung ist ein an sich bekannter Federspeicherzylinder mit einer Federspeicherkammer 1 und einer Druckmittelkammer 2 dargestellt. Die Druckmittelkammer 2 ist über einen Druckmittelanschluß 3 mit Druckluft beaufschlagbar, wodurch ein Federspeicherkolben 4 im Zylinder 5, der einen Teil des Federspeicherzylinders bildet, gegen die Kraft einer Schraubendruckfeder 7 in eine in der Zeichnung dargestellte Bremslösestellung bewegbar ist. Der Federspeicherkolben 4 steht über eine Kolbenstange 6 mit einem nicht dargestellten Bremsgestänge in Wirkverbindung, derart, daß bei entlüfteter Druckmittelkammer 2 der Federspeicherkolben 4 durch die Feder 7 in einer in der Zeichnung gestrichelt dargestellte Stellung bewegt wird, in der die Bremsen des Fahrzeuges über das Bremsgestänge festgesetzt sind.

Die auf die beschriebene Weise festgesetzten Bremsen sind, z.B. bei einem Ausfall des Druckluft vorrats, mechanisch lösbar. Eine hierzu dienende Spanneinrichtung besteht aus einem an der Innenseite des Zylinderbodens 8 des Zylinders 5 angeordneten Federteller 10, einem mit dem Federteller 10 verbundenen Gewindestutzen 16 mit einem Innengewinde 11 und einem als Bremslöseschraube dienenden Schraubenbolzen 12, der in den Gewindestutzen 6 eingeschraubt und in seiner Längsrichtung verstellbar ist.

Ein mit dem Schraubenbolzen 12 lösbar verbundener Kopf 13 ist für das Ansetzen eines Werkzeuges geeignet, mit dem der Schraubenbolzen 12 um einen vorgegebenen Hub aus dem Federspeicherzylinder herausgedreht werden kann. Eine Schulter 14 eines mit dem Schraubenbolzen 12 verbundenen Schraubenkopfes 17 legt sich dabei an eine Stützfläche 15 des Federspeicherkolbens 4 an, so daß der Federspeicherkolben 4 gegen die Kraft der Schraubendruckfeder 7 in die in der Zeichnung dargestellte Bremslösestellung bewegbar ist.

Der Federspeicherkolben 4, die Schraubendruckfeder 7, der Federteller 10 und der Schraubenbolzen 12 sind außerhalb des Zylinders 5 zu einer Montageeinheit 4, 7, 10, 12 montierbar. Hierzu ist der Kopf 13 vom Schraubenbolzen 12 entfernt. Der Schraubenbolzen 12 wird in die rohrförmige Kolbenstange 6 hineingeschoben, bis die Schulter 14 an der Stützfläche 15 anliegt. Die Schraubendruckfeder 7 wird dann mit dem Federteller 10 in der in der Zeichnung dargestellten Lage gegen den Federspeicherkolben 4 gedrückt, bis das Gewinde des Schraubenbolzens 12 in das Innengewinde 11 des Gewindestutzens 16 einschraubbar ist. Der Federteller 10 der Spanneinrichtung 10, 16, 11, 12 liegt auf der dem Federspeicherkolben 4 abgewandten Endwindung der Schraubendruckfeder 7 auf.

Durch Drehen des den Federspeicherkolben 4, die Schraubendruckfeder 7 und den Federteller 10 axial durchdringenden Schraubenbolzens 12 mit Hilfe eines am Schraubenkopf 17 angreifenden Werkzeuges ist der Abstand des Federtellers 10 vom Federspeicherkolben 4 in axialer Richtung verstellbar.

Vor dem Einsetzen der auf die beschriebene Weise außerhalb des Federspeicherzylinders vorgespannten Montageeinheit 4, 7, 10, 12 in den Zylinder 5 sollte der Federspeicherkolben 4 zum Federteller 10 eine Stellung innerhalb seines maximalen Arbeitshubes einnehmen.

Die vorgespannte Montageeinheit 4, 7, 10, 12 wird soweit in den Zylinder 5 eingeschoben, bis der Federteller 10 die der Federspeicherkammer 1 zugewandte Fläche des Zylinderbodens 8 berührt und der Gewindeschaft des Gewindebolzens 12 durch eine im Zylinderboden 8 vorhandene Öffnung 19 über den Zylinderboden 8 hinausragt. Der Kopf 13 wird mit dem über den Zylinderboden 8 hinausragenden Gewindeschaft des Schraubenbolzens 12 drehfest verbunden. Der Federteller 10 wird durch von der Außenseite des Federspeicherzylinders her lösbare Verbindungsmittel, die aus Schrauben 18 bestehen, mit der dem Federspeicherkolben 4 zugewandten Seite des Zylinderbodens 8 verbunden.

Nach dem Verschließen der Druckmittelkammer 2 durch einen Deckel 20, der auch die Kolbenstange 6 führt, wird der Federspeicherkolben 4 durch Drehen des Schraubenbolzens 12 am Kopf 13 in die Betriebsstellung bewegt, in der der Federspeicherkolben 4 seinen maximalen Arbeitshub aufweist.

Zwecks Ausbau der Montageeinheit 4, 7, 10, 12 aus einem betriebsbereiten Federspeicherzylinder wird der Federspeicherkolben 4 durch die Spanneinrichtung 10, 16, 11, 12 in eine Stellung innerhalb seines maximalen Arbeitshubes bewegt. Nach Abnahme des Deckels 20 und Entfernen des Kopfes 13 und der Schrauben 18 ist die Montageeinheit 4, 7, 10, 12 aus dem Zylinder 5 herausnehmbar.

## Patentansprüche

1. Federspeicherzylinder, insbesondere druckmittelbetätigter Federspeicherbremszylinder für Straßenfahrzeuge, mit einem zwischen dem Boden des Federspeicherzylinders und einem Federspeicherkolben eingespannten, aus einer Schraubendruckfeder bestehenden Federspeicher und einer auf den Federspeicherkolben mechanisch wirkenden Spanneinrichtung, mit der der Abstand des Federspeicherkolbens vom Boden des Federspeicherzylinders verstellbar ist, wobei die Spanneinrichtung (10, 16, 11, 12) einen Federteller (10) aufweist, der auf der dem Federspeicherkolben (4) abgewandten Endwindung der Schraubendruckfeder (7) aufliegt und dessen Abstand vom Federspeicherkolben (4) mittels eines den Federteller (10), die Schraubendruckfeder (7) und den Federspeicherkolben (4) axial durchdringenden Schraubenbolzens (12) verstellbar ist, <u>dadurch gekennzeichnet</u>, daß der Federteller (10) durch von der Außenseite des Federspeicherzylinders her lösbare Verbindungsmittel (18) mit dem Boden (8) des Federspeicherzylinders (5) verbunden ist.

2. Federspeicherzylinder nach Anspruch 1, <u>dadurch gekennzeichnet</u>, daß die Verbindugnsmittel aus Schrauben (18) bestehen.

## Claims

1. Spring cylinder, especially a pressure-medium-actuated spring brake cylinder for road vehicles, having a storage spring means that is held between the base of the spring cylinder and a spring piston and that consists of a helical compression spring, and having a clamping device that acts mechanically on the spring piston and with which the distance between the spring piston and the base of the spring cylinder can be adjusted, the clamping device (10, 16, 11, 12) having a spring plate (10) that rests on the end turn of the helical compression spring (7) remote from the spring piston (4) and the distance between which and the spring piston (4) being adjustable by means of a threaded bolt (12) that passes axially through the spring plate (10), the helical compression spring (7) and the spring piston (4), <u>characterised in that</u> the spring plate (10) is connected to the base (8) of the spring cylinder (5) by connecting means (18) that can be released from outside the spring cylinder.

2. Spring cylinder according to claim 1, <u>characterised in that</u> the connecting means consist of screws (18).

## Revendications

1. Cylindre à accumulation d'énergie à ressort, notamment cylindre de frein à accumulation d'énergie à ressort et à commande par fluide de pression pour véhicules routiers, comprenant un ressort accumulateur sous forme d'un ressort hélicoïdal de compression qui est bandé, c'est-à-dire comprimé entre le fond du cylindre accumulateur et un piston accumulateur, ainsi qu'un dispositif de tension agissant mécaniquement sur le piston accumulateur, au moyen duquel on peut régler la distance entre ce piston et le fond du cylindre accumulateur, le dispositif de tension (10, 16, 11, 12) comportant un disque d'appui de ressort (10) appliqué contre la spire terminale opposée au piston (4) du ressort hélicoïdal de compression (7) et dont la distance par rapport au piston accumulateur (4) est réglable au moyen d'une vis (12) qui traverse axialement le disque d'appui (10), le ressort (7) et le piston (4), <u>caractérisé en ce que</u> le disque d'appui de ressort (10) est relié au fond (8) du cylindre accumulateur (5) par des moyens de liaison (18) détachables de l'extérieur du cylindre.

2. Cylindre selon la revendication 1, <u>caractérisé en ce que</u> les moyens de liaison sont des vis (18).

EP 0 219 613 B2

5